**Europäisches Patentamt**

**European Patent Office**

**Office européen des brevets**

(19)

(11) Veröffentlichungsnummer: **0 474 132 A1**

# (12) EUROPÄISCHE PATENTANMELDUNG

(21) Anmeldenummer: **91114628.0**

(22) Anmeldetag: **30.08.91**

(51) Int. Cl.5: **G11B 33/02**, G11B 33/00, H05K 5/04, H05K 5/00

(30) Priorität: **05.09.90 DE 9012689 U**

(43) Veröffentlichungstag der Anmeldung: **11.03.92 Patentblatt 92/11**

(84) Benannte Vertragsstaaten: **AT BE CH DE ES FR GB IT LI NL SE**

(71) Anmelder: **Siemens Nixdorf Informationssysteme Aktiengesellschaft Fürstenallee 7 W-4790 Paderborn(DE)**

(72) Erfinder: **Stickel, Heinz, Dipl.-Ing. (FH) Augsburger Strasse 46 W-8038 Gröbenzell(DE)**
Erfinder: **Herweg, Jürgen, Dipl.-Ing. (FH = Kieselstrasse 9 W-8000 München 50(DE)**

(74) Vertreter: **Fuchs, Franz-Josef, Dr.-Ing. et al Postfach 22 13 17 W-8000 München 22(DE)**

(54) **Haltevorrichtung für Computerspeicherlaufwerke.**

(57) Ein universell in verschiedene Computergehäuse einsetzbares Chassis (3) enthält Führungselemente (2) zur Aufnahme eines Laufwerkträgers (1). Die Führungselemente (2) sind so angeordnet, daß der Laufwerkträger (1) in zwei um 90° verdrehten Einbaulagen in das Chassis (3) geschoben werden kann. Die Einschubtiefe wird durch entsprechende Begrenzungsvorrichtungen (4,7) bestimmt. Rastelemente (5) und Rastgegenelemente (6) fixieren die jeweilige Einbauposition des Laufwerkträgers (1) im Chassis (3).

FIG 1

Die Erfindung betrifft eine Haltevorrichtung für Computerspeicherlaufwerke nach dem Oberbegriff des Anspruchs 1.

Computerspeicherlaufwerke haben definierte Einbaumaße, so daß sichergestellt ist, daß jedes Computerspeicherlaufwerk in jedes Computergehäuse paßt. Voraussetzung dafür ist, daß eine Haltevorrichtung für dieses Computerlaufwerk im Computergehäuse vorgesehen ist. Eine solche Haltevorrichtung kann ebenfalls so ausgestaltet sein, daß sie in verschiedenen Computergehäusen verwendbar ist. Ein solches Chassis wird auf Grund des geringen Raumangebotes in einem Computergehäuse immer in der gleichen Lage eingebaut. Ist also beispielsweise in einem Towergehäuse die Haltevorrichtung so eingebaut, daß die Laufwerke in waagrechter Lage befestigbar sind, dann sind die Laufwerke in einem nicht als Tower ausgeführten Computergehäuse nur in vertikaler Lage einbaubar.

Es finden grundsätzlich zwei verschiedene Laufwerkstypen Verwendung: Laufwerke mit jederzeit austauschbarem Datenträger und Laufwerke mit stationärem Datenträger. Auf der Frontseite von Computergehäusen befindet sich vor Laufwerken mit stationärem Datenträger meist eine mit dem Computergehäuse verbundene Laufwerksabdeckkung. Um genügend Platz für diese Laufwerksabdeckung zur Verfügung zu haben, muß das Laufwerk in einem bestimmten Abstand zur Frontseite des Computergehäuses eingebaut sein. Dagegen müssen Laufwerke mit einem jederzeit austauschbaren Datenträger so im Computergehäuse eingebaut sein, daß die Einführöffnung für den Datenträger in das Laufwerk eine mit einer Aussparung für die Einführöffnung versehene Laufwerksabdeckung durchdringen kann.

Die der Erfindung zugrundeliegende Aufgabe ist es, eine universell in unterschiedliche Computergehäuse einsetzbare Haltevorrichtung für Computerspeicherlaufwerke zu schaffen, die es ermöglicht, die Computerspeicherlaufwerke in zwei um 90° verdrehten Einbaulagen, in unterschiedlichen Einbauebenen, in unterschiedlichen Einbautiefen in diesen Einbauebenen und auf einfache Weise zu befestigen.

Diese Aufgabe wird erfindungsgemäß durch die im Anspruch 1 angegebenen Merkmale gelöst.

Die Haltevorrichtung besteht aus einem auf der Frontseite und auf der Rückseite offenen, quadratischen, käfigartigen Chassis, in das die auf den plattenförmigen Laufwerkträgern montierten Computerspeicherlaufwerke eingeschoben werden können. Ist die Anzahl der Computerspeicherlaufwerke so groß, daß diese nicht in einem einzigen Chassis Platz finden, dann wird das Chassis durch Anfügen weiterer, rechteckiger, käfigartiger Chassis zu einem genügend großen Chassis erweitert. Durch die Erweiterung erhält das Chassis eine längliche Ausdehnung. Diese längliche Ausdehnung und eventuell seitlich vom Chassis abstehende Befestigungspunkte bewirken, daß das Chassis nur in einer bestimmten Lage in ein Computergehäuse eingesetzt werden kann.

Die gewünschte, beispielsweise horizontale Einbaulage der Computerspeicherlaufwerke ist durch die in zwei um 90° verdrehten Einbaulagen des Laufwerkträgers auf einfache Weise realisierbar. Der Laufwerkträger muß nur lagerichtig in das Chassis eingeschoben werden. Um dies zu ermöglichen, sind an den Chassiswänden Führungselemente vorgesehen, die auch das Einschieben des Laufwerkträgers in verschiedenen Einbauebenen pro Einbaulage erlauben.

In jeder Einbaulage und jeder Einbauebene ist der Laufwerkträger im Chassis fixierbar. Diese Fixierung erfolgt durch das Eingreifen eines Rastgegenelements in ein Rastelement. Ist das Rastgegenelement mit dem Chassis verbunden, dann ist das Rastelement mit dem Laufwerkträger verbunden und umgekehrt. Als Rastelemente dienen Kerben, Bohrungen oder sonstige Vertiefungen im Blech. In diese Rastelemente greifen Rastgegenelemente in Form von federnd gelagerten Stiften, ein Federdraht oder federnd gelagerte Kugeln ein.

In welcher Position der Laufwerkträger im Chassis fixiert wird, bestimmt neben Rast- und Rastgegenelement eine Einschubtiefebegrenzungseinrichtung. Wird der Laufwerkträger von hinten in das Chassis eingeschoben, kann die Einschubtiefe auf einfache Weise durch ein seitlich vom Laufwerkträger abstehendes Teil begrenzt werden. Dieses Teil kann angeschraubt, angeschweißt oder Teil des plattenförmigen Laufwerkträgers sein. Verwendet man stets den gleichen Laufwerkträger mit einer fest damit verbundenen Einschubtiefebegrenzungseinrichtung, dann kann man eine unterschiedliche Einschubtiefe in verschiedenen Einbauebenen, beispielsweise dadurch erreichen, daß man im Chassis in Einbauebenen, in denen der Laufwerkträger tiefer eingeschoben werden soll, als in anderen Einbauebenen, eine Materialaussparung vornimmt, in die die Einschubtiefebegrenzungseinrichtung des Laufwerkträgers beim Einschieben eindringt. Ebenso wäre es möglich, am Chassis nach hinten abstehende Erhebungen vorzusehen, die die Einschubtiefe verringern.

Weitere vorteilhafte Ausgestaltungen und Weiterbildungen der Erfindung können den Unteransprüchen entnommen werden.

Im folgenden wird ein Ausführungsbeispiel der Erfindung anhand der Zeichnung näher erläutert. Dabei zeigen

FIG 1     eine Ansicht der Chassisrückseite,

FIG 2     eine Draufsicht auf das Chassis,

FIG 3     eine Seitenansicht des Laufwerkträgers und

FIG 4    eine Draufsicht des Laufwerkträgers.

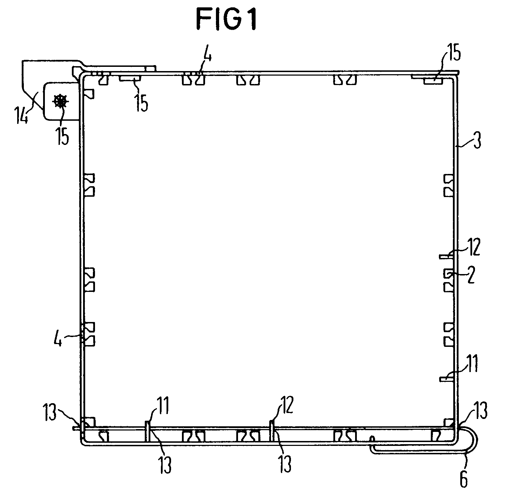

FIG 1 zeigt die Rückansicht eines Chassis 3 mit Führungselementen 2. Die Führungselemente 2 sind im Stanzverfahren hergestellte Erhebungen des Bleches der Chassiswände. Diese Erhebungen ragen in den Innenraum des Chassis 3. Jedes Führungselement 2 besteht aus einem Erhebungspaar. Diese Erhebungspaare sind so angeordnet, daß sich zwischen jedem Erhebungspaar ein Spalt bildet, in den die Grundplatte eines Laufwerkträgers 1 einschiebbar ist. Man erkennt, daß die sich jeweils gegenüberliegenden Führungselemente 2 jeweils eine Einbauebene für den Laufwerkträger 1 bilden. Der Laufwerkträger 1 kann also in verschiedenen Einbauebenen entweder in vertikaler oder in horizontaler Einbaulage von hinten in das Chassis 3 eingeschoben werden.

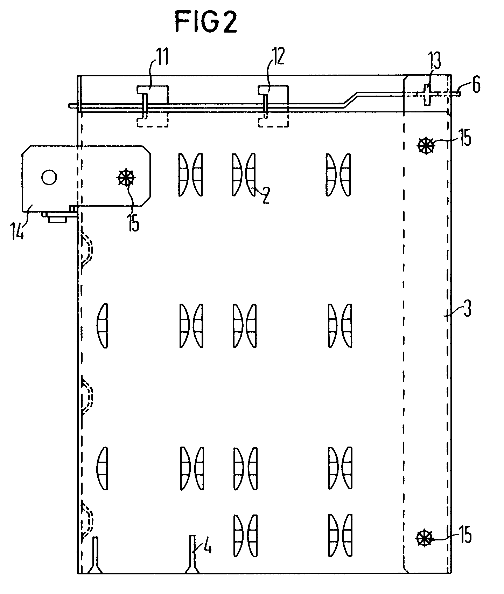

Die Einschubtiefe wird durch die Einschubtiefebegrenzungseinrichtungen 4, 7 bestimmt. In den FIG 1 und 2 erkennt man einige Nuten 4, die in jeweils einer Einbauebene in die Chassiswand eingebracht sind. Beim Einschieben des Laufwerkträgers 1 in eine solche Einbauebene dringt eine Nase 7 des Laufwerkträgers 1 in die Nut 4 ein. Schiebt man den Laufwerkträger 1 in Einbauebenen, die keine Nut 4 aufweisen, dann ist die Einschubtiefe des Laufwerkträgers 1 in das Chassis 3 geringer.

In beiden Einschubtiefevarianten muß der eingeschobene Zustand des Laufwerkträgers 1 in das Chassis 3 fixiert werden. Zu diesem Zweck ist am Laufwerkträger 1 ein Rastelement 5 und am Chassis 3 ein Rastgegenelement 6 vorgesehen. Als Rastgegenelement 6 dient ein im Frontbereich, in unmittelbarer Chassiswandnähe senkrecht zur Einbauebene des Laufwerkträgers verlaufender, durch Öffnungen 13 im Chassis 3 und in Niederhalteelementen 11, 12 gesteckter Federdraht. Die Öffnungen 13 sind durch Bohrungen, Langlöcher und sich kreuzende Langlöcher realisiert. Damit ist gewährleistet, daß sich der Federdraht 6 stets in dem Bereich, in dem er eine Einbauebene schneidet, bis an das Blech der Chassiswand gedrückt werden kann. Andererseits ist durch die Wahl der Öffnungen 13 und deren Positionierung in der Chassiswand sichergestellt, daß das Rastgegenelement 6 mit ausreichender Kraft von der Chassiswand abgedrückt wird, um sicher im Rastelement 5 zu verbleiben. Im vorliegenden Beispiel sind die Öffnungen 13 in den beiden Chassiswänden durch sich kreuzende Langlöcher, die Öffnung im Niederhalteelement 11 durch eine Bohrung und die Öffnung im Niederhalteelement 12 durch ein senkrecht zur Chassiswand gerichtetes Langloch realisiert. Die Niederhalteelemente 11, 12 sind materieller Bestandteil der Chassiswand. Sie wurden aus der Chassiswand auf drei Seiten ausgestanzt und in Richtung zur Chassismitte um 90° gebogen. In der von hinten betrachtet rechten Seitenwand des Chassis 3 sind ebenfalls Niederhalteelemente 11, 12 mit Öffnungen 13 und entsprechende Öffnungen 13 in den senkrecht zur rechten Chassiswand stehenden Chassiswänden vorgesehen. Wird eine waagrechte Einbauweise des Laufwerkträgers 1 im Chassis 3 gewünscht, so muß lediglich das Rastgegenelement 6 durch die zur rechten Chassiswand gehörigen Öffnungen 13 gesteckt werden. Auch ein gleichzeitiges Vorhandensein zweier Rastgegenelemente 6, je eines in vertikaler und horizontaler Richtung, ist möglich.

Das Chassis 3 ist aus einem Blech in die Form eines von hinten betrachtet, quadratischen Käfig gebogen. An den offenen Enden überlappt sich das Blech. An dieser Überlappungsstelle sind die sich überlappenden Teile durch eine nietähnliche Verbindung 15 miteinander fest verbunden. Auch Punktschweißen, Verschrauben oder ähnliches wäre möglich. Zur Befestigung des Chassis 3 in einem Computergehäuse ist im Außenbereich des Chassis an einer Kante ein Winkel 14 angebracht. Dieser Winkel 14 ist an zwei verschiedenen Chassiswänden durch jeweils eine nietähnliche Verbindung 15 mit dem Chassis fest verbunden. Auch hier wäre Punktschweißen, Verschrauben oder ähnliches möglich.

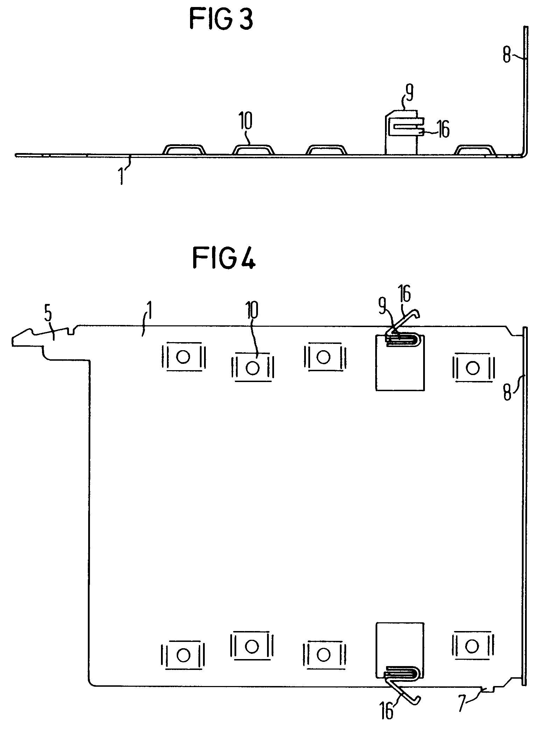

Die FIG 3 und 4 zeigen eine Seitenansicht und eine Draufsicht des Laufwerkträgers 1. Der Laufwerkträger 1 ist eine ebene Platte, an deren Vorderseite das Rastelement 5 vorsteht und an deren Rückseite eine Rückwand 8 angebracht ist. Diese Rückwand 8 ist materieller Bestandteil der ebenen Platte des Laufwerkträgers 1 und ist rechtwinkelig nach oben gebogen. Diese Rückwand 8 könnte auch ein separates Bauelement sein, das mit dem Laufwerkträger 1 mechanisch fest oder lösbar verbunden ist. Das Rastelement 5 befindet sich, wenn man den Laufwerkträger von hinten betrachtet, rechts vorne. Das Rastelement 5 ist materieller Bestandteil des Laufwerkträgers 1. Man erkennt zwei kleine Kerben im Rastelement 5, in die der Federdraht 6, der mit dem Chassis 3 verbunden ist, einrasten kann. In welche der beiden Nuten der Federdraht 6 einrastet, wird durch die Einschubtiefebegrenzungseinrichtungen 4, 7 bestimmt. Die von hinten betrachtet links hinten vom Laufwerkträger seitlich abstehende Nase 7 dringt beim Einschiebevorgang in eine in der Einbauebene eventuell vorhandene Nut 4 ein. Während des Einschiebevorgangs wird der Federdraht 6 durch eine erste schiefe Ebene des Rastelementes 5 zur Chassiswand hingedrückt, bis der Federdraht in die erste Kerbe des Rastelements 5 eingreift. Ab jetzt dringt die Nase 7 in die Nut 4 des Chassis 3 ein. Gleichzeitig gleitet der Federdraht 6 auf der zweiten schiefen Ebene des Rastelements 5 und wird wiederum zur Chassiswand gedrückt, bis er in die zweite Kerbe des Rastelements 5 eingreift. Beim Eingreifen des Federdrahtes 6 in die zweite Kerbe schlägt auch die Nase 7 des Laufwerkträgers 1 am Ende der Nut 4 des Chassis 3 an. Die endgültige Einbauposition ist erreicht und fixiert.

Auf dem Laufwerkträger 1 sind mehrere Befestigungspunkte 10 zur Befestigung eines Computerspeicherlaufwerks auf dem Laufwerkträger 1 vorgesehen. Diese Befestigungspunkte 10 erheben sich etwas über die Oberfläche des Laufwerkträges 1 und sind mittig durchbohrt. Des weiteren sind zum Zweck der Masseverbindung mit dem Chassis 3 auf dem Laufwerkträger 1 Halterungen 9 für Kontaktfedern 16 vorgesehen. Die Halterung 9 steht senkrecht nach oben vom plattenförmigen Laufwerkträger 1 in dessen seitlichen Randbereich ab. Die Kontaktfedern 16 sind auf die Halterung 9 aufgesteckt und stehen zur Seite über den Laufwerkträger 1 hinaus. Beim Einschieben des Laufwerkträgers 1 in das Chassis 3 werden die Kontaktfedern 16 zwischen der Halterung 9 und der jeweiligen Chassiswand eingeklemmt. Damit ist ein sicherer Masseschluß zwischen Laufwerkträger 1 und Chassis 3 hergestellt.

## Patentansprüche

1. Haltevorrichtung für Computerspeicherlaufwerke, bestehend aus einem rechteckigen, käfigartigen Chassis und mindestens einem mit dem Chassis verbindbaren, plattenförmigen Laufwerkträger, **dadurch gekennzeichnet,** daß der Laufwerksträger (1) durch an den Chassiswänden vorgesehene Führungselemente (2) in das Chassis (3) einschiebbar ist, daß am Chassis (3) die Führungselemente (2) so angeordnet sind, daß der Laufwerkträger (1) in zwei um 90° verdrehten Einbaulagen und in jeder Einbaulage in mindestens einer Einbauebene einschiebbar ist, daß am Chassis (3) und/oder am Laufwerkträger (1) Einschubtiefebegrenzungseinrichtungen (4,7) vorgesehen sind und daß am Chassis (3) oder am Laufwerkträger (1) für mindestens eine Einschubtiefe ein Rastelement (5) vorgesehen ist, in das ein am Laufwerkträger (1) oder am Chassis (3) befestigtes Rastgegenelement (6) eingreift.

2. Haltevorrichtung nach Anspruch 1, **dadurch gekennzeichnet,** daß die Führungselemente (2) durch im Stanzverfahren hergestellte Erhebungen (2) des Bleches der Chassiswände gebildet sind, daß die Erhebungen (2) paarweise so angeordnet sind, daß sich zwischen jedem Erhebungspaar ein Spalt bildet, in den der Laufwerkträger (1) einschiebbar ist und daß an jeder Chassiswand pro Einbauebene mindestens zwei Erhebungspaare (2) so angeordnet sind, daß die zugehörigen Spalten in der gleichen Einbauebene liegen.

3. Haltevorrichtung nach einem der Ansprüche 1 oder 2, **dadurch gekennzeichnet,** daß die Einschubtiefebegrenzungsvorrichtung (4,7) durch eine seitlich von der Grundplatte des Laufwerkträgers abstehende Nase (7) gebildet ist.

4. Haltevorrichtung nach Anspruch 3, **dadurch gekennzeichnet,** daß in mindestens eine der Einbauebenen an einer Chassiswand eine Nut (4) eingebracht ist, in die die Nase (7) beim Einschieben des Laufwerkträgers (1) eindringt.

5. Haltevorrichtung nach einem der vorhergehenden Ansprüche, **dadurch gekennzeichnet,** daß als Rastelement (5) eine seitlich in die Grundplatte des Laufwerkträgers (1) eingebrachte Kerbe dient, in die ein senkrecht zur Einbauebene des Laufwerkträgers (1) verlaufender, durch Öffnungen (13) im Chassis (3) und in Niederhalteelementen (11,12) gesteckter Federdraht (6) nach Einschieben des Laufwerkträgers in Sollage eingreift.

# FIG 1

# FIG 2

## FIG 3

## FIG 4

## EINSCHLÄGIGE DOKUMENTE

EP 91114628.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | ELECTRICAL DESIGN NEWS, Juni 1963, "Convenient Extrusions Prov." Seiten 86-87 * Seite 86 * -- | 1-3 | G 11 B 33/02 G 11 B 33/00 H 05 K 5/04 H 05 K 5/00 |
| A | FR - A1 - 2 598 585 (MONNET) * Fig. 1-6; Zusammenfassung * -- | 1-3 | |
| A | EP - A2 - 0 040 754 (SIEMENS AG) * Fig. 1; Seite 6, Zeile 2 - Seite 7 * -- | 1-3 | |
| A | DE - A1 - 3 410 480 (WITTNER GMBH) * Fig. 1; Anspruch 1 * ---- | 1-3 | |

RECHERCHIERTE SACHGEBIETE (Int. Cl.⁵)

G 11 B 33/00
H 05 K 5/00

Der vorliegende Recherchenbericht wurde für alle Patentansprüche erstellt.

| Recherchenort | Abschlußdatum der Recherche | Prüfer |
|---|---|---|
| WIEN | 18-11-1991 | BERGER |